# EUROPEAN PATENT APPLICATION

(11) **EP 2 128 750 A2**
(43) Date of publication of application: **02.12.2009**
(21) Application number: 09161273.9
(22) Date of filing: 27.05.2009
(51) Int. Cl.: G06F 3/048

(54) **Mobile terminal and character input method**

(30) Priority: 27.05.2008 JP 2008138272
(71) Applicant: NTT DoCoMo, Inc., Chiyoda-ku Tokyo 100-6150 (JP)
(72) Inventor: Yamazaki, Hitoshi, Tokyo 100-6150 (JP); Anzawa, Kazuya, Tokyo 100-6150 (JP); Endo, Kentaro, Tokyo 100-6150 (JP); Kamiya, Toshihiko, Tokyo 100-6150 (JP)
(74) Representative: Beder, Jens

(57) **Abstract**

The present invention provides a mobile terminal having a touch panel, which is capable of improving the convenience and operability of character input. The mobile terminal having a touch panel includes an input control unit that detects a switching instruction for switching a screen of the touch panel, the switching instruction being issued by a user, and a screen display control unit that displays a text sheet displaying the character string input by the user on the touch panel, and when the switching instruction is detected by the input control unit, displays a character input sheet having a software keyboard for inputting a character string, on the text sheet in an overlapping manner on the touch panel, and makes the character string displayed on the text sheet visible.

## Description

### BACKGROUND OF THE INVENTION

### Field of the Invention

The present invention relates to a mobile terminal having a touch panel, and a character input method using this mobile terminal. Related Background Art

A user interface that uses a touch panel in place of a conventional hardware keyboard or numeric key is expected to be mounted in a field of mobile terminals such as mobile phones and PDA (Personal Digital Assistant). This user interface allows character input and other input operation, as well as information display using a software keyboard displayed on the touch panel (see Japanese Patent Application Laid-Open No. 08-221169 (Patent Reference 1), for example).

However, in a mobile terminal to which the software keyboard of Patent Reference 1 is applied, the software keyboard is displayed on a screen of the touch panel when performing the character input operation. Therefore, the size of the region for displaying the strings of characters that are input using the software keyboard is subjected to restriction, and as a result the number of character strings that can be displayed on the touch panel at once is reduced, causing inconvenience in creating a document or editing work, as well as a problem on convenience of the character input operation.

In addition, the software keyboard needs to display a display region of the input strings of characters in accordance with the size of the touch panel, so that the contents of the input strings of characters along can be checked sequentially when inputting the characters. For this reason, the key size on the keyboard is reduced due to the restriction on the display size, and as a result incorrect input occurs easily, causing an operational problem on the character input operation.

### SUMMARY OF THE INVENTION

An object of the present invention, therefore, is to solve the problems described above and provide a mobile terminal having a touch panel, which can improve the convenience and operability of character input, and a character input method using this mobile terminal.

In order to solve the problems described above, a mobile terminal of the present invention is a mobile terminal having a touch panel, including: character string display control means for displaying, on the touch panel, an input character string display region in which a character string input by a user is displayed; instruction detection means for detecting a switching instruction for switching a screen of the touch panel, the switching instruction being issued by the user; and display control means for, when the switching instruction is detected by the instruction detection means, displaying a character input sheet having a software keyboard for inputting the character string, on the input character string display region, in an overlapping manner on the touch panel, and making the character string displayed on the input character string display region visible.

Similarly, in order to solve the problems described above, a character input method of the present invention is a character input method that uses a mobile terminal having a touch panel, the character input method including: a character string display control step of displaying, on the touch panel, an input character string display region in which a character string input by a user is displayed; an instruction detection step of detecting a switching instruction for switching a screen of the touch panel, the switching instruction being issued by the user; and a display control step of, when the switching instruction is detected in the instruction detection step, displaying a character input sheet having a software keyboard for inputting the character string, on the input character string display region in an overlapping manner on the touch panel, and making the character string displayed on the input character string display region visible.

According to these configuration, the character input sheet having the software keyboard for inputting a character string is displayed on the input character string display region in an overlapping manner on the touch panel, and then the character string displayed on the input character string display region is made visible. Therefore, the input character string display region can be freely displayed on the touch panel without impinging on the arrangement of the software keyboard, and the number of character strings that can be displayed on the touch panel at once is increased, thereby facilitating document creation and editing work. As a result, convenience of the character input operation can be improved. In addition, the keys of the software keyboard can be displayed large enough for the user to press, whereby incorrect input can be prevented, and the operability of the character input operation can be enhanced.

Moreover, in the mobile terminal of the present invention, it is preferred that the character string display control means further display a part of the character input sheet on the input character string display region in an overlapping manner on an end part of the touch panel, that the instruction detection means detect a contact operation performed on the part of the character input sheet by the user, and further detect a contact movement state following the contact operation, in which a finger of the user moves on the touch panel without having a contact state therebetween disconnected, and that the display control means display at least a part of the character input sheet on the input character string display region in an overlapping manner along a direction of the contact movement on the touch panel.

According to this configuration, when the user brings his/her finger into contact with the part of the character input sheet displayed on the end part of the touch panel and moves the finger in contact with the part of the character input sheet, at least a part of the character input sheet is displayed on the input character string display region in an overlapping manner along the direction of the contact movement on the touch panel. Therefore, the display size of the character input sheet can be adjusted arbitrarily in accordance with the distance in which the contact movement is made, and the degree of freedom for configuring the screen when performing the character input operation can be improved.

Furthermore, in the mobile terminal of the present invention, it is preferred that the character input sheet have a plurality of character input sheets corresponding to character types. According to this configuration, any character input sheet can be selected and displayed depending on the character type that the user wishes to input, and the type of the input character can be changed easily.

In the mobile terminal of the present invention, after the display control means displays one of the plurality of character input sheets on the input character string display region in an overlapping manner on the touch panel, when the contact movement of another character input sheet is detected by instruction detection means, it is preferred that the display control means display at least a part of the other character input sheet on the one of the character input sheets in an overlapping manner in accordance with the contact movement on the touch panel, and then make a character string to be displayed on the input character string display region visible.

According to this configuration, the character input sheet that is displayed on the touch panel later is overlapped on the character input sheet that is already displayed, and the character input sheet that is displayed later can be used with a priority.

In the mobile terminal of the present invention, when the display control means displays the plurality of character input sheets on the touch panel in a partially overlapping manner, it is preferred that the touch panel receives character input operations performed using all of the plurality of character input sheets. According to this configuration, character input can be performed using the plurality of character types simultaneously, whereby the convenience of the character input operation can be further improved.

In the mobile terminal of the present invention, when the instruction detection means detects the contact movement state that follows the contact operation performed on at least one of the character input sheets displayed on the touch panel, it is preferred that the display control means make a part of each of the character input sheets display on the touch panel.

According to this configuration, even when the plurality of character input sheets are displayed on the touch panel, a part of each of the character input sheets can be displayed by performing the contact movement operation at once. Therefore, the character input sheets that are displayed on the input character string display region in an overlapping manner can be moved easily to the outside the screen to promptly activate the input character string display region, so that the input character string display region and the character input sheet can be switched easily. As a result, the convenience of the editing work can be improved.

According to the mobile terminal and the character input method using the mobile terminal of the present invention, the convenience and operability of character input can be enhanced in the mobile terminal having a touch panel.

### BRIEF DESCRIPTION OF THE DRAWINGS

FIG. 1 is a perspective view of a mobile terminal according to an embodiment of the present invention;
FIG. 2 is a functional block diagram of the mobile terminal shown in FIG. 1;
FIG. 3 is a diagram showing an example of a display screen of a touch panel shown in FIG. 1;
FIG. 4 is a diagram showing an example of a character input sheet shown in FIG. 3;
FIG. 5 is a diagram showing an example of the character input sheet shown in FIG. 3;
FIG. 6 is a diagram showing an example of the character input sheet shown in FIG. 3;
FIG. 7 is a diagram showing an example of the character input sheet shown in FIG. 3;
FIG. 8 is a flowchart showing character input processing executed by the mobile terminal according to the embodiment of the present invention;
FIG. 9 is a flowchart showing a subroutine of character input sheet selection processing shown in FIG. 8;
FIG. 10 is a diagram schematically showing how the character input sheet is displayed on the screen in the character input processing shown in FIGS. 8 and 9;
FIG. 11 is a diagram schematically showing how the character input sheet is displayed on the screen in the character input processing shown in FIGS. 8 and 9;
FIG. 12 is a diagram schematically showing how the character input sheet is displayed on the screen in the character input processing shown in FIGS. 8 and 9; and
FIG. 13 is a diagram schematically showing how the character input sheet is displayed on the screen in the character input processing shown in FIGS. 8 and 9.

### DESCRIPTION OF THE PREFERRED EMBODIMENTS

A suitable embodiment of the mobile terminal and a character input method using the mobile terminal according to the present invention is described hereinafter with reference to the drawings. The top of each drawing is referred to as "upper side" or "upper part," and the bottom as "lower side" or "lower part" hereinafter.

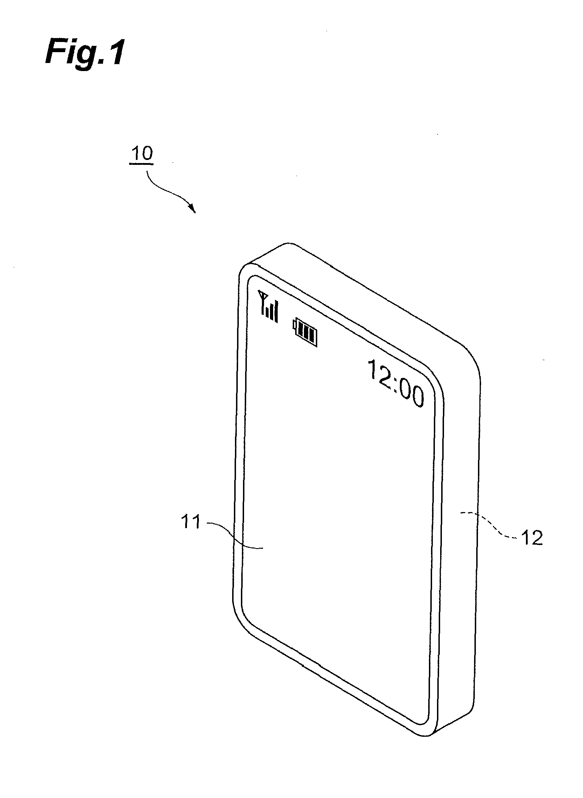

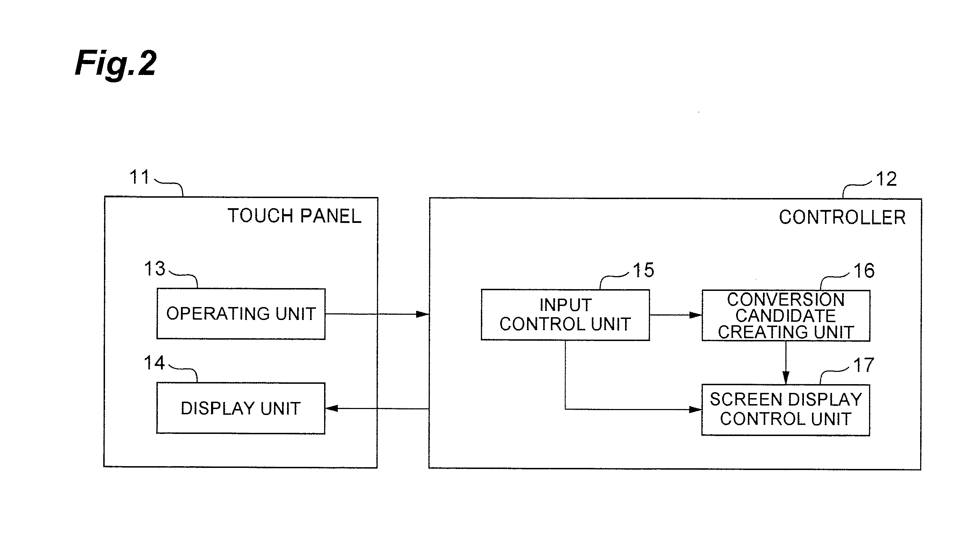

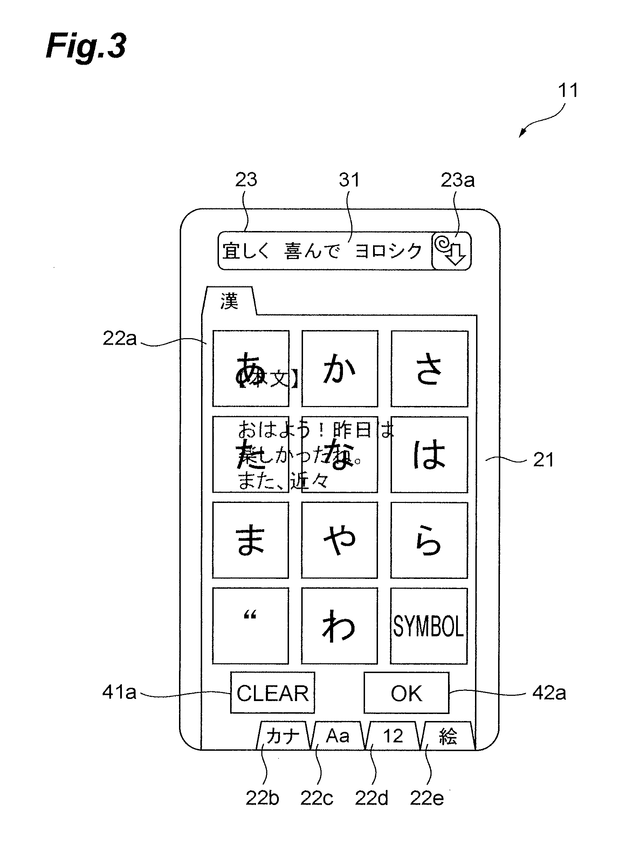

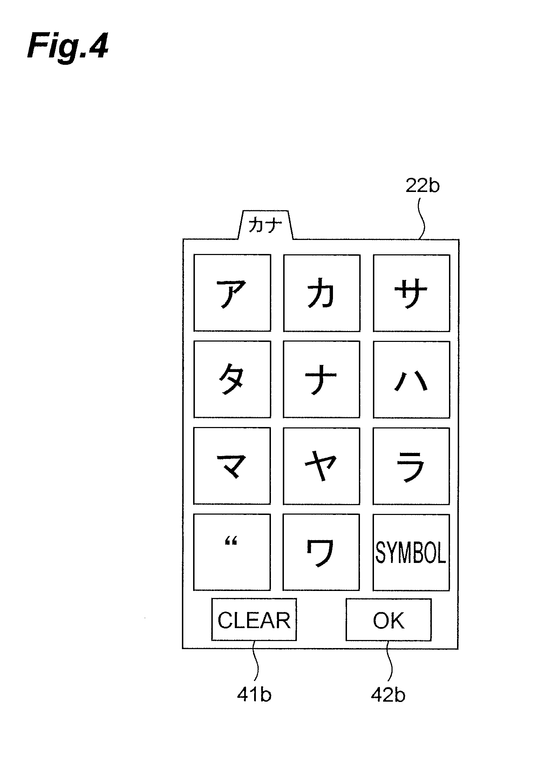

First, a configuration of the mobile terminal according to the present embodiment is described. FIG. 1 is a perspective view of the mobile terminal according to the embodiment. FIG. 2 is a functional block diagram of the mobile terminal shown in FIG. 1. FIG. 3 is a diagram showing an example of a display screen of a touch panel shown in FIG. 1. FIGS. 4 to 7 are each a diagram showing an example of a character input sheet shown in FIG. 3.

As shown in FIG. 1, a mobile terminal 10 of the present embodiment has a touch panel 11 that occupies the majority of a main body front surface, and a controller 12 in a main body internal part. Unlike a mobile phone that has a conventional hardware numeric keypad, this mobile terminal 10 uses the touch panel 11 so that an input operation for inputting characters is performed in conjunction with information display performed in response to the input operation.

The touch panel 11 has an operating unit 13 and a display unit 14, as shown in FIG. 2. The operating unit 13 detects the position where a finger of a user or a touch pen (stylus) is in contact with the touch panel 11. Specifically, the operating unit 13 is a panel member that is made of a transparent material or the like and attached to the surface of the display unit 14 in a state in which a display screen of the display unit 14 is visible. Examples of the method for detecting the contact position include a matrix switch scheme, a capacitance scheme, an optical scheme, a pressure sensitive scheme, and an electromagnetic induction scheme. The operating unit 13, once detecting the contact position of the user, transmits positional information to the controller 12. The display unit 14 specifically is a liquid crystal display or an organic EL display for presenting various information received from the controller 12 to the user.

A screen shown in FIG. 3 is displayed on the touch panel 11 as a standard screen during a character input operation. As shown in FIG. 3, a text sheet (an input character string display region) 21 for displaying an input character string is disposed on the standard screen of the touch panel 11, and a " 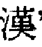 " sheet ("KANJI" sheet) 22a for inputting a Chinese character (KANJI) and a hiragana character is disposed such that the text sheet 21 is overlapped (overlaid) thereon. This "KANJI" sheet 22a is one of a plurality of character input sheets 22a, 22b, 22c, 22d and 22e described hereinafter.

The "KANJI" sheet 22a is provided with twelve software keys as in a numeric keypad of a conventional mobile phone. Each of the keys corresponds to any of a hiragana group of each section of the Japanese syllabary composed of " 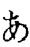 " section to " 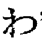 " section, a punctuation mark group including """, and a symbol group. When the user touches the region of any of these keys on the touch panel 11 by means of his/her finger or the touch pen, the characters corresponding to the key are selected and displayed on the text sheet 21. Note that the characters displayed on the text sheet 21 are changed in accordance with the number of times the key is touched continuously. For example, when touching the key of 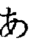 "" section, " 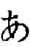 " is displayed by touching the key once, " 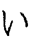 " is displayed by touching the key twice, " 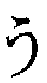 " is displayed by touching the key three times, " 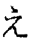 " is displayed by touching the key four times, and " 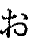 " is displayed by touching the key five times. The same applies to the other keys.

Furthermore, tabs of " 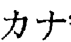 " sheet ("KANA" sheet) 22b, "Aa" sheet 22c, "12" sheet 22d, and " 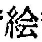 " sheet ("EMOJI" sheet) 22e are disposed as the other character input sheets in the lower part of the standard screen. When the user touches any of the tabs of the "KANA" sheet 22b, "Aa" sheet 22c, "12" sheet 22d, and "EMOJI" sheet 22e on the touch panel 11 and slides the tab upward while keeping this contact state (contact movement), the character input sheet of this tab is pulled out of the lower side of the screen so that the character input sheet is disposed on the forefront surface.

The "KANA" sheet 22b is a character input sheet for inputting katakana characters and provided with twelve software keys as in "KANJI" sheet 22a, as shown in FIG. 4. Each of the twelve software keys corresponds to any of the katakana group of each section of Japanese syllabary composed of " 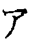 " section to " 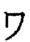 " section, punctuation mark group, and symbol group.

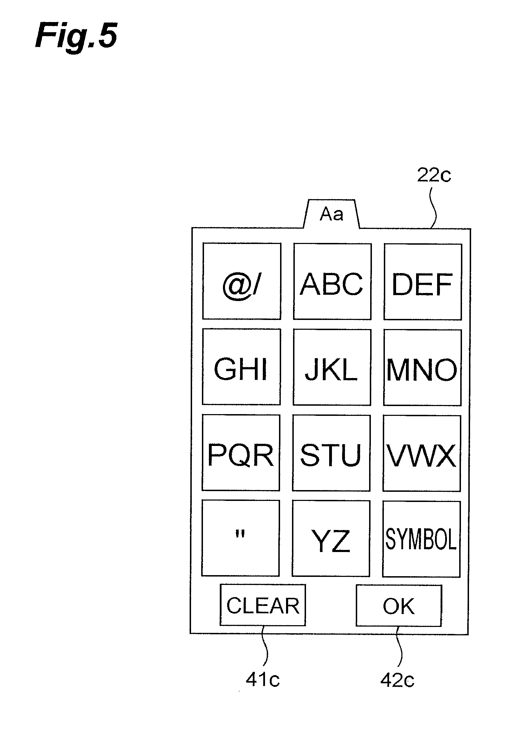

The "Aa" sheet 22c is a character input sheet for inputting the Roman characters and is provided with twelve software keys as in the "KANJI" sheet 22a as shown in FIG. 5. Each of the twelve software keys corresponds to any of a Roman character group consisting of two to three alphabets, a character group including "@" and "/", the punctuation mark group, and the symbol group.

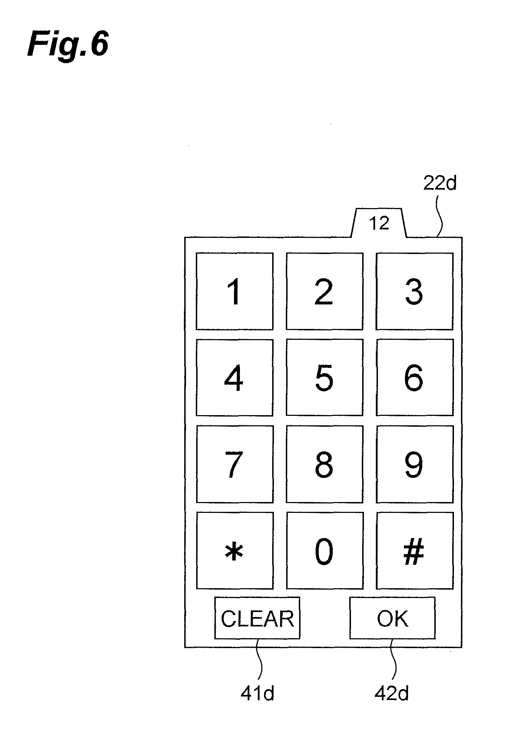

The "12" sheet 22d is a character input sheet for inputting numerals, wherein, as shown in FIG. 6, numerals of "0" to "9", "*" and "#" are allocated to the twelve software keys, as in the numeric keypad of the conventional mobile phone.

The "KANJI" sheet 22a, "KANA" sheet 22b, "Aa" sheet 22c and "12" sheet 22d are configured by the same key arrangement, and have different character types allocated to the keys. The content of each character type allocated to each key is shown hereinafter based on the "12" sheet 22d. Here, the allocated contents are shown in order of "12" sheet 22d, "KANJI" sheet 22a, "KANA" sheet 22b, and "Aa" sheet 22c.
"1" → " 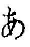 section" / " 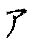 section" / @ etc.
"2" → " 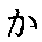 section" / " 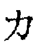 section" / ABC
"3" → " 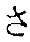 section" / " 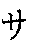 section" / DEF
"4" → " 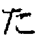 section" / " 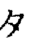 section" / GHI
"5" → " 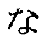 section" / " 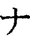 section" / JKL
"6" → " 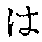 section" / " 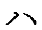 section" / MNO
"7" → " 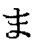 section" / " 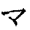 section" / PQR
"8" → " 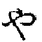 section" / " 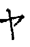 section" / STU
"9" → " 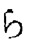 section" / " 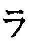 section" / VWZ
"0" → " 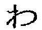 section" / " 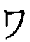 section" / YZ
"*" → "punctuation mark etc." / "punctuation mark etc." /punctuation mark etc.
"#" → "symbols" / "symbols" / "symbols"

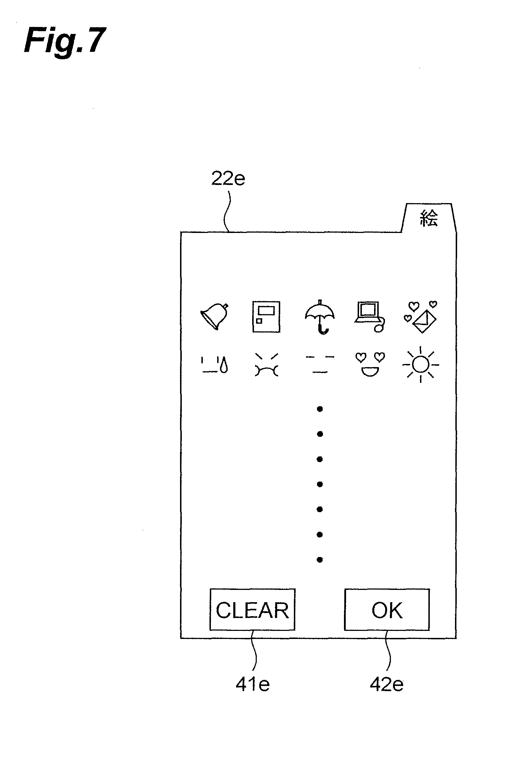

The "EMOJI" sheet 22e is a character input sheet for inputting pictographic characters (EMOJI) and has pictographic characters arranged therein, as shown in FIG. 7. When the user touches the region of the pictographic characters on the touch panel 11 by means of the touch pen, the pictographic characters are displayed on the text sheet 21.

The character input sheets 22a, 22b, 22c, 22d and 22e are provided with, respectively, "clear" keys 41a, 41 b, 41c, 41 d and 41e for deleting the input characters, and "OK (determination)" keys 42a, 42b, 42c, 42d and 42e for confirming the content obtained through the character input operation.

The character input sheets 22a to 22e are overlaid on the text sheet 21 and displayed using the entire screen of the touch panel 11, and the size of the keys of each sheet is made large to prevent incorrect input. Moreover, when overlaid on the text sheet 21, the character input sheets 22a to 22e are, for example, displayed translucently in relation to the text sheet 21 so that the user can always view the text sheet 21.

Moreover, when the characters are input using the abovementioned character input sheets 22a to 22e on the screen of the touch panel 11 shown in FIG. 3, a conversion candidate list 31 corresponding to the input character string is displayed on a conversion candidate display region 23 in the upper part of the screen. Because the character input sheets 22a to 22e are disposed on the entire screen of the touch panel 11 as described above, the size of the conversion candidate display region 23 is restricted. Therefore, when the conversion candidate list 31 cannot be displayed completely on the conversion candidate display region 23, a scroll button 23a is displayed on the right end of the conversion candidate display region 23 after a displayable part of the conversion candidate list 31 is displayed.

This scroll button 23a is a trigger for starting to scroll-display the conversion candidate list 31 displayed on the conversion candidate display region 23. For example, when the user touches this scroll button 23a and contact-moves it on the touch panel, the conversion candidate list 31 is scroll-displayed in response to the distance in which the contact move is made.

Referring to FIG. 2 again, the controller 12 is configured by an input control unit (instruction detection means) 15, a conversion candidate creating unit 16, and a screen display control unit (character string display control means, display control means) 17.

The input control unit 15 receives input data from the user via the operating unit 13 of the touch panel 11, and an operation instruction, such as a switching instruction for switching the screen of the touch panel 11. More specifically, the input control unit 15 detects that the user touches any of the tabs of the character input sheets 22a to 22e. Upon detection of a contact movement following this contact between the tab and the user, the input control unit 15 recognizes the contact state between the tab and the user and the contact movement state on the touch panel 11 as the switching instructions. The input control unit 15 then identifies the character input sheet that the user attempts to pull out on the touch panel 11, and transmits this character input sheet to the screen display control unit 17. Here, "contact movement" means the movement on the touch panel 11 made by the user without disconnecting the contact state between the user and the touch panel 11.

Furthermore, the input control unit 15 detects which button on the currently displayed character input sheet on the touch panel 11 is contacted by the user and how many times the button is contacted. The input control unit 15 then identifies the type of the input character and transmits it to the conversion candidate creating unit 16 and the screen display control unit 17.

Moreover, upon detection of a contact between the user and the scroll button 23a, the input control unit 15 transmits, to the screen display control unit 17, the fact that the input control unit 15 detects the trigger for starting to scroll-display the conversion candidate display region 23.

The conversion candidate creating unit 16 creates the conversion candidate list 31 corresponding to the input character string composed of the character identified by the input control unit 15. More specifically, once receiving the character data from the input control unit 15, the conversion candidate creating unit 16 predicts a word that has the character data as the initial character. Moreover, in consideration of a past selection history, the conversion candidate creating unit 16 determines an order of candidates in response to the tendency of the user, creates the conversion candidate list 31, and transmits the created conversion candidate list 31 to the screen display control unit 17.

The screen display control unit 17 uses the input data and operation instruction received from the input control unit 15, as well as the conversion candidate list 31 received from the conversion candidate creating unit 16, to control the configuration of the screen displayed on the display unit 14 of the touch panel 11. More specifically, when the input control unit 15 detects that the user attempts to pull out any of the character input sheets 22a to 22e, the screen display control unit 17 pulls out the character input sheet on the touch panel 11 so as to overlap the character input sheet on the text sheet 21, displays the character input sheet, and brings the character input sheet into a state for receiving a character input (activates the character input sheet). How much of the character input sheet is pulled out is determined based on the direction or distance of the contact movement detected by the input control unit 15. At this moment, the screen display control unit 17 configures the screen of the touch panel 11 such that the text sheet 21 can be seen through, for example, the activated character input sheet, so that the text in the text sheet 21 can be deciphered from the top of the character input sheet.

Furthermore, when the user touches a key on the active character input sheet, the screen display control unit 17 displays, on the text sheet 21, the characters corresponding to the key, and displays, on the conversion candidate display region 23, the conversion candidate list 31 predicted from the characters. When the conversion candidate list 31 cannot be displayed completely on the conversion candidate display region 23, the scroll button 23a is displayed on the conversion candidate display region 23. When the user touches the scroll button 23a and thereby the contact movement following this contact is detected, the conversion candidate list 31 displayed on the conversion candidate display region 23 is scroll-displayed in response to this movement.

The controller 12 is configured physically by a CPU (central processing unit), RAM (random access memory), ROM (read only memory), and other hardware. The functions of the input control unit 15, conversion candidate creating unit 16 and screen display control unit 17 configuring the controller 12 are realized by causing the CPU, RAM and other hardware to read a predetermined computer software to operate the operating unit 13 and display unit 14 of the touch panel 11 under the control of the CPU, and by reading and writing the data stored in the RAM or ROM.

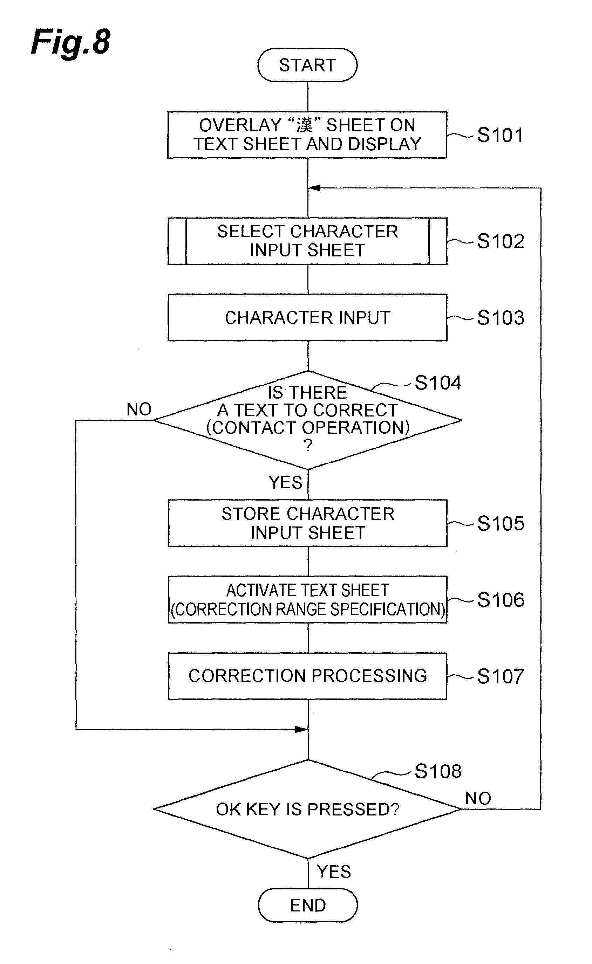

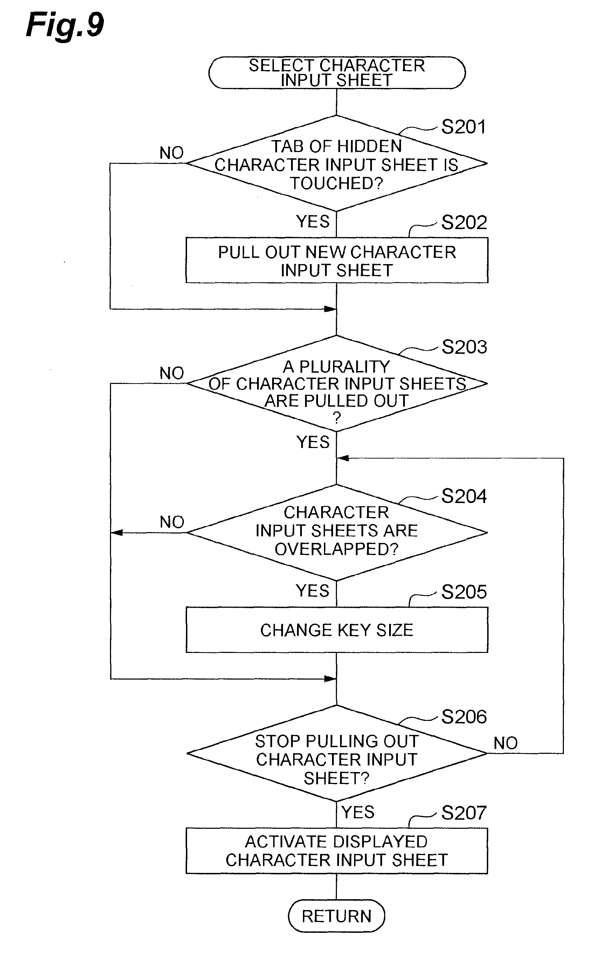

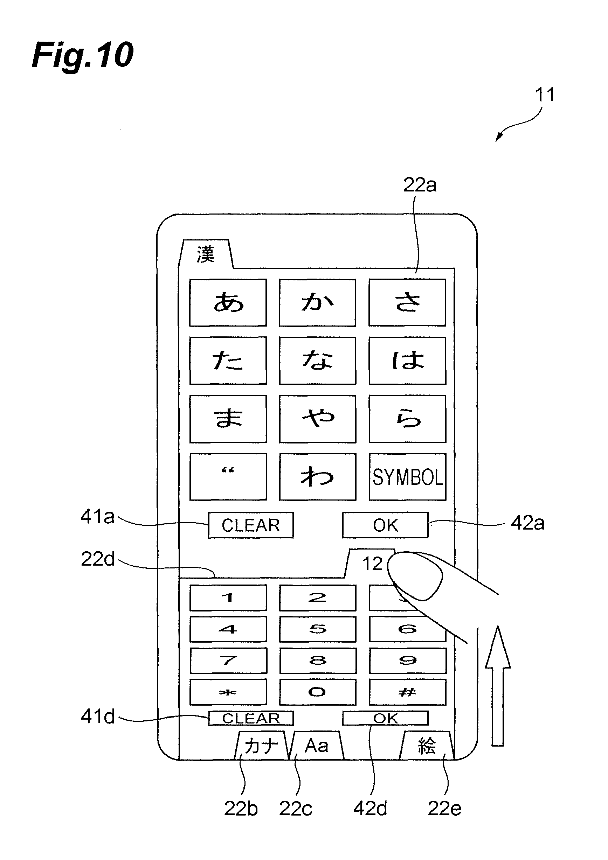

Next, the operation of the mobile terminal 10 according to the present embodiment and the character input method using the mobile terminal 10 according to the present embodiment are described. FIG. 8 is a flowchart showing character input processing executed by the mobile terminal 10 according to the embodiment. FIG. 9 is a flowchart showing a subroutine of character input sheet selection processing shown in FIG. 8. FIGS. 10 to 13 are each a diagram schematically showing how the character input sheet is displayed on the screen in the character input processing shown in FIGS. 8 and 9.

As shown in FIG. 8, when the character input processing is started in the mobile terminal 10 according to the present embodiment, the screen display control unit 17 displays the text sheet 21 on the entire screen of the display unit 14 of the touch panel 11. The "KANJI" sheet 22a is overlaid on the text sheet 21 and displayed on the entire screen by the screen display control unit 17 (S101: character string display control step), whereby the standard screen shown in FIG. 3 is configured.

Next, character input sheet selection is carried out (S 102). In this processing, as shown in FIG. 9, first the operating unit 13 and the input control unit 15 confirm whether or not the user touches any of the tabs of the character input sheets 22b to 22e that are not currently displayed on the touch panel 11 (S201: contact movement detection step). When the user does not touch the tab, the processing moves to step S203. When it is detected that the user touches the tab, the screen display control unit 17 newly pulls out the tab of the character input sheets and displayed on the display unit 14 of the touch panel 11 (S202), as shown in FIG. 10. In the example shown in FIG. 10, the "12" sheet 22d is newly pulled out on the touch panel 11.

Next, the screen display control unit 17 confirms whether or not the plurality of character input sheets are currently pulled out and displayed on the display unit 14 of the touch panel 11 (S203). When the plurality of character input sheets are not pulled out, the processing moves to step S206.

When it is determined in step S203 that the plurality of character input sheets are pulled out on the touch panel 11, the screen display control unit 17 confirms whether or not these character input sheets are partially overlapped on each other (S204). When the character input sheets are not overlapped on each other, the processing moves to step S206. When it is determined that the character input sheets are overlapped on each other, the size of each keys on the character input sheet displayed on the touch panel 11 is changed (S205). Specifically, the size of the keys of the character input sheet is changed in response to the size of the character input sheet displayed on the touch panel 11.

For example, the example in FIG. 10 shows a state in which approximately 1/3 of the "12" sheet 22d is pulled out from the lower side of the touch panel 11. At this moment, the size of the keys of the "12" sheet 22d is changed to have approximately 1/3 of the height of the full size shown in FIG. 6. On the other hand, approximately 1/3 of the "KANJI" sheet 22a that is originally displayed in full-size on the touch panel 11 is hidden at its lower part by the "12" sheet 22d. At this moment, the size of the keys of the "KANJI" sheet 22a is changed to have approximately 2/3 of the full size shown in FIG. 3.

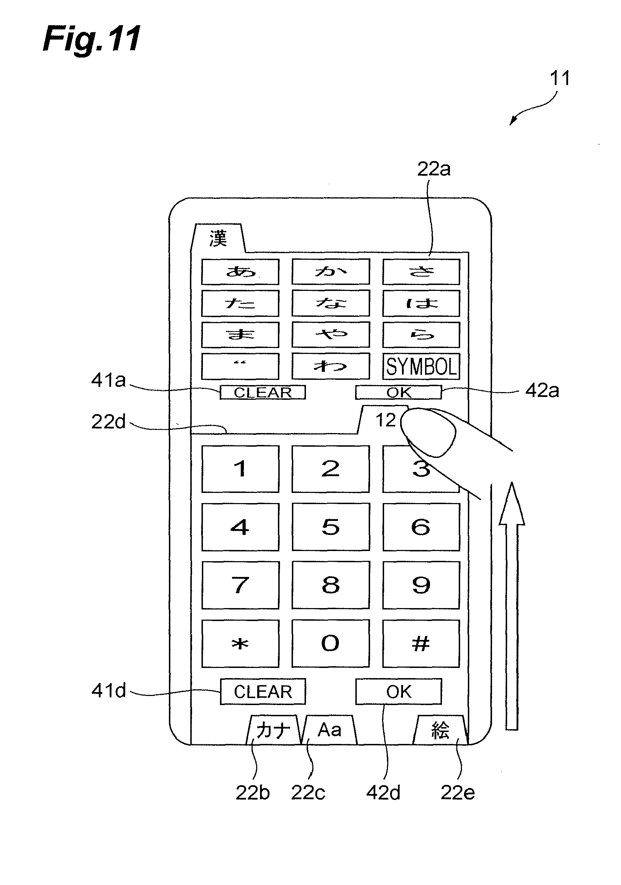

Similarly, the example in FIG. 11 shows a state in which approximately 2/3 of the "12" sheet 22d is pulled out from the lower side of the touch panel 11. At this moment, the size of the keys of the "12" sheet 22d is changed to have approximately 2/3 of the height of the full size shown in FIG. 6. On the other hand, approximately 2/3 of the "KANJI" sheet 22a is hidden at its lower part by the "12" sheet 22d. At this moment, the size of the keys of the "KANJI" sheet 22a is changed to have approximately 1/3 of the height of the full size shown in FIG. 3.

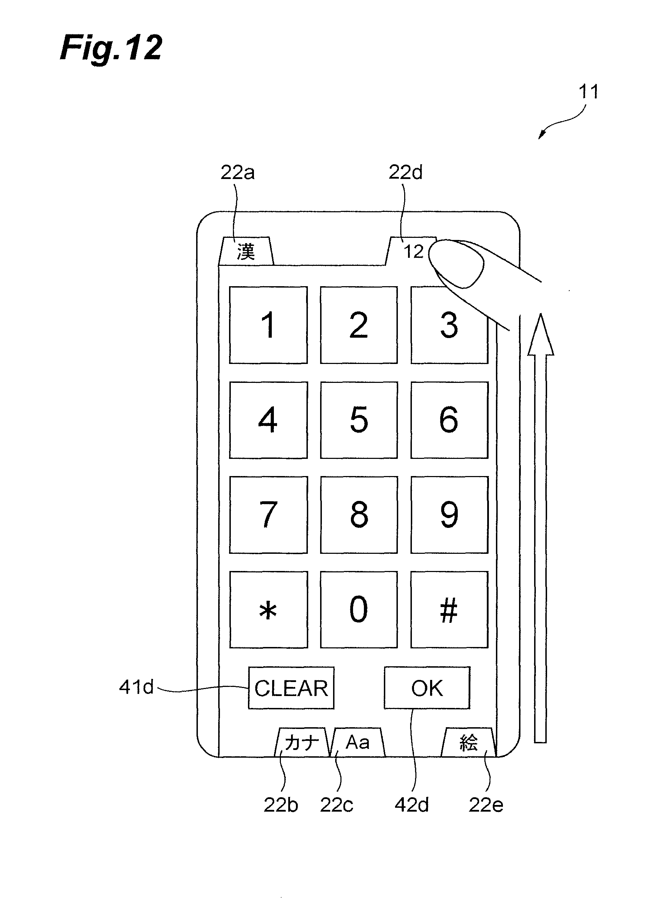

Returning to FIG. 9, the operating unit 13 and the input control unit 15 confirm whether or not the operation of pulling out a character input sheet is ended (S206). Specifically, when the user removes his/her finger from the touch panel 11 while the plurality of character input sheets 22a, 22d are displayed together on the touch panel 11 as shown in FIG. 10 or FIG. 11, or when the newly pulled out character input sheet ("12" sheet 22d) is completely overlapped on the originally displayed character input sheet ("KANJI" sheet 22a) as shown in FIG. 12, the input control unit 15 determines that the operation of pulling out a character input sheet is ended.

When it is determined in step S206 that the operation of pulling out a character input sheet is ended, the screen display control unit 17 activates the character input sheet that is currently displayed on the touch panel 11 (S207: display control step), configures the screen of the touch panel 11 such that the text in the text sheet 21 can be deciphered from the top of the activated character input sheet, and returns the processing to the main loop of FIG. 8. The screen display control unit 17 activates both the "KANJI" sheet 22a and "12" sheet 22d in the examples in FIGS. 10 and 11, and activates only the "12" sheet 22d displayed on the forefront surface in the example in FIG. 12.

When it is determined in step S206 that the operation of pulling out a character input sheet is not ended, the processing is returned to step S204, and the steps S204, S205 are repeated until this pulling out operation is ended.

Returning to FIG. 8, the operating unit 13, the input control unit 15, the conversion candidate creating unit 16, and the screen display control unit 17 are used by the user to perform the character input operation via the character input sheet that is currently displayed on the touch panel 11 (S103). Specifically, the operating unit 13 detects a key operation performed by the user, and the input control unit 15 identifies the type of a character that is input by the user, in accordance with the currently displayed character input sheet. The information on the input character is transmitted to the conversion candidate creating unit 16, used for creating the conversion candidate list 31, transmitted to the screen display control unit 17, and displayed on the text sheet 21 of the touch panel 11. The conversion candidate list 31 created by the conversion candidate creating unit 16 is transmitted to the screen display control unit 17 and displayed on the conversion candidate display region 23 of the touch panel 11. When the operating unit 13 and the input control unit 15 detect that the user touches and selects a desired conversion candidate from the conversion candidate list 31 displayed on the conversion candidate display region 23, the screen display control unit 17 displays the selected conversion candidate on the text sheet 21.

Next, the operating unit 13 and the input control unit 15 confirm whether or not the text input to the text sheet 21 is corrected (S 104). Specifically, when the operating unit 13 and the input control unit 15 detect the contact operation that the user performs on the tab of the character input sheet that is currently displayed on the touch panel 11, and detect that the contact movement operation is performed to move the character input sheet to the outside of the screen, it is determined that the user attempts to display the text sheet 21 on the forefront surface and correct the text. When it is determined that the text is not corrected, the processing moves to step S 108.

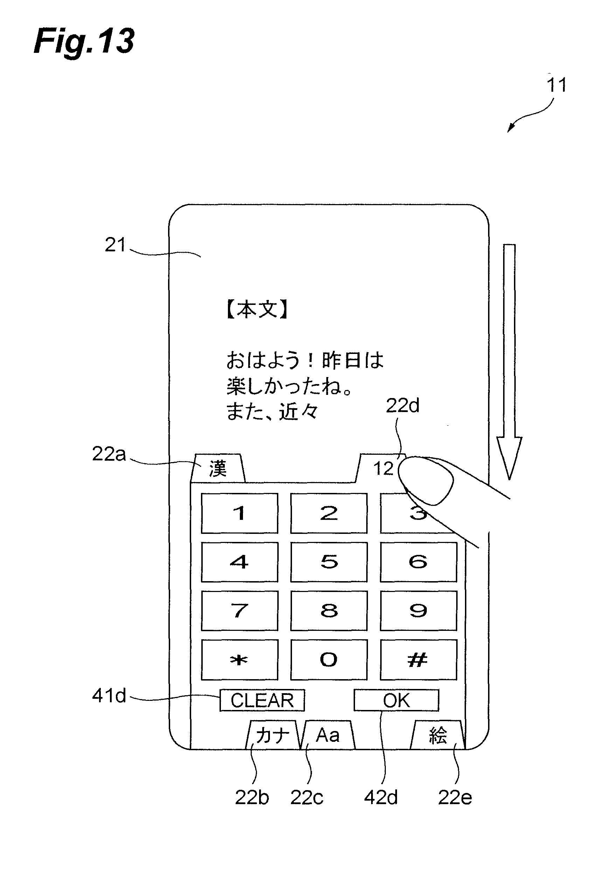

When it is determined in step S104 that the text is corrected, the screen display control unit 17 pulls down the character input sheet displayed currently on the touch panel 11, to the lower side of the screen, in accordance with the direction and distance of the contact movement operation performed by the user, and eventually displays the tab only and stores the other part of the character input sheet outside the screen (S 105). At this moment, when the tab of the "12" sheet 22d on the forefront screen is contact-moved to the lower side of the screen as shown in FIG. 13, "KANJI" sheet 22a that is hidden behind the abovementioned sheet is also pulled down as well. Even when contact-moving the tab of the "KANJI" sheet 22a to the lower side of the screen, the "12" sheet 22d on the forefront surface is pulled down to the lower side of the screen along with the "KANJI" sheet 22a.

Next, the screen display control unit 17 displays the text sheet 21 on the forefront surface of the touch panel 11 and switches the text sheet to a state in which a correction range specification can be received (active state).

In addition, the input control unit 15, the conversion candidate creating unit 16 and the screen display control unit 17 performs correction processing on the text sheet 21 (S107). Specifically, first, a correction range is specified on the activated text sheet 21 through the contact movement operation of the user that is detected by the input control unit 15. Thereafter, the input control unit 15, the conversion candidate creating unit 16, and the screen display control unit 17 appropriately select the character input sheets 22a to 22e, as in the character input sheet selection processing (S 102) described above, and the selected character input sheets are displayed on the touch panel 11. The text of the text sheet 21 is corrected by deleting corrected sections using the clear keys 41 a to 41e of the respective sheets or overwriting the characters.

Then, the operating unit 13 and the input control unit 15 confirm whether or not the OK keys 42a to 42e of the currently active character input sheets are touched (pressed) by the user (S 108). When it is detected that the OK keys 42a to 42e are pressed, the screen display control unit 17 determines that the character input operation performed on the text sheet 21 is ended and ends the character input processing. When the OK keys 42a to 42e are not pressed, the processing returns to step S102, and the processing between steps S102 and S106 is repeated until the OK keys 42a to 42e are pressed.

The functions and effects of the mobile terminal 10 according to the present embodiment are described next. In the mobile terminal 10 according to the present embodiment, the screen display control unit 17 displays, on the touch panel 11, the text sheet 21 displaying a character string input by the user. Then, when the input control unit 15 detects the switching instruction for switching the screen of the touch panel 11 that is received from the user, the screen display control unit 17 displays the character input sheets 22a to 22e having a software keyboard for inputting a character string on the text sheet 21 in an overlapping manner on the touch panel 11, and makes the character string displayed on the text sheet 21 visible.

According to this configuration, the character input sheets 22a to 22e having the software keyboard for inputting a character string are displayed on the text sheet 21 in an overlapping manner on the touch panel 11. Furthermore, the character string on the text sheet 21 is displayed visibly. Therefore, the text sheet 21 can be freely displayed on the touch panel 11 without impinging on the arrangement of the software keyboard, and the number of character strings that can be displayed on the touch panel 11 at once is increased, thereby facilitating document creation and editing work. As a result, the convenience of the character input operation can be improved. In addition, the size of the keys of the software keyboard can be displayed large enough for the user to press, whereby incorrect input can be prevented, and the operability of the character input operation can be enhanced.

The screen display control unit 17 displays the tabs of the character input sheets 22a to 22e on the text sheet 21 in an overlapping manner on a lower end of the touch panel 11. When the input control unit 15 detects the contact operation performed on the tabs of the character input sheets 22a to 22e by the user, and detects, subsequently from the contact operation, the contact movement state in which the finger moves on the touch panel 11 without having the contact state therebetween disconnected, the screen display control unit 17 displays at least a part of each of the character input sheets 22a to 22e on the text sheet 21 in an overlapping manner in accordance with the direction of the contact movement on the touch panel 11.

According to this configuration, when the user touches the tabs of the character input sheets 22a to 22e displayed on the lower end of the touch panel 11 and contact-moves the tabs, at least a part of each of the character input sheets 22a to 22e are displayed on the text sheet 21 in an overlapping manner in accordance with this contact movement on the touch panel 11. Therefore, the display size of the character input sheets 22a to 22e can be adjusted arbitrarily in accordance with the distance in which the contact movement is made, and the degree of freedom for configuring the screen when performing the character input operation can be improved.

Moreover, because the character input sheets 22a to 22e include plurality of character input sheets corresponding to the character types, any character input sheet can be selected and displayed depending on the character type that the user wishes to input, and the type of the input character can be changed easily.

In addition, after one of the character input sheets 22a to 22e is displayed on the text sheet 21 in an overlapping manner on the touch panel 11, when the input control unit 15 detects a contact movement of another character input sheet, the screen display control unit 17 displays at least a part of the other character input sheet on one character input sheet in an overlapping manner in accordance with the contact movement on the touch panel 11, and makes the character string displayed on the text sheet 21 visible.

According to this configuration, the character input sheet that is displayed on the touch panel 11 later is overlapped on the character input sheet that is already displayed, and the character input sheet that is displayed later can be used with a priority.

When the screen display control unit 17 displays the plurality of character input sheets 22a to 22e on the touch panel 11 in a partially overlapping manner, the touch panel 11 receives the character input operations performed using all of the plurality of character input sheets 22a to 22e. According to this configuration, character input can be performed using the plurality of character types simultaneously, and the convenience of the character input can be further improved.

When the input control unit 15 detects a contact movement state following the contact operation that is performed on at least one of the character input sheets 22a to 22e displayed on the touch panel 11, the screen display control unit 17 displays a part of each of the character input sheets on the touch panel 11.

According to this configuration, even when the plurality of character input sheets 22a to 22e are displayed on the touch panel 11, a part of each of the character input sheets can be displayed on the touch panel 11 by performing the contact movement operation once. Therefore, the character input sheets 22a to 22e that are displayed on the text sheet 21 in an overlapping manner can be moved easily to the outside the screen to promptly activate the text sheet 21, so that the text sheet 21 and the character input sheets 22a to 22e can be switched easily. As a result, the convenience of the editing work can be improved.

Although the above has described a suitable embodiment of the mobile terminal 10 and the character input method using the mobile terminal 10 according to the present invention, the present invention is not limited to this embodiment. For example, in the embodiment described above, the character input sheets 22a to 22e are displayed on the touch panel 11 when the user performs the contact operation on the tabs and contact-moves the sheets, but the character input sheets 22a to 22e may be displayed on the touch panel 11 when the user simply touches the tabs.

In addition, the position for storing the character input sheets 22a to 22e may be provided in a section other than the lower part of the screen, and the direction for pulling out the character input sheets 22a to 22e may be a direction other than the direction extending from the lower side to the upper side of the screen.

## Claims

1. A mobile terminal having a touch panel, comprising:
character string display control means for displaying, on the touch panel, an input character string display region in which a character string input by a user is displayed;
instruction detection means for detecting a switching instruction for switching a screen of the touch panel, the switching instruction being issued by the user; and
display control means for, when the switching instruction is detected by the instruction detection means, displaying a character input sheet having a software keyboard for inputting the character string, on the input character string display region in an overlapping manner on the touch panel, and making the character string displayed on the input character string display region visible.

2. The mobile terminal according to claim 1, wherein
the character string display control means further displaying a part of the character input sheet on the input character string display region in an overlapping manner on an end part of the touch panel,
the instruction detection means detects a contact operation performed on the part of the character input sheet by the user, and further detects a contact movement state following the contact operation, in which a finger of the user moves on the touch panel without having a contact state therebetween disconnected, and
the display control means displays at least a part of the character input sheet on the input character string display region in an overlapping manner along a direction of the contact movement on the touch panel.

3. The mobile terminal according to claim 2, wherein the character input sheet has a plurality of character input sheets corresponding to character types.

4. The mobile terminal according to claim 3, wherein, after the display control means displays one of the plurality of character input sheets on the input character string display region in an overlapping manner on the touch panel, when the contact movement of another character input sheet is detected by instruction detection means, the display control means displays at least a part of the other character input sheet on the one of the character input sheets in an overlapping manner in accordance with the contact movement on the touch panel, and then makes a character string to be displayed on the input character string display region visible.

5. The mobile terminal according to claim 4, wherein, when the display control means displays the plurality of character input sheets on the touch panel in a partially overlapping manner, the touch panel receives character input operations performed using all of the plurality of character input sheets.

6. The mobile terminal according to any one of claims 1 to 5, wherein, when the instruction detection means detects the contact movement state that follows the contact operation performed on at least one of the character input sheets displayed on the touch panel, the display control means makes a part of each of the character input sheets display on the touch panel.

7. A character input method that uses a mobile terminal having a touch panel, comprising:
a character string display control step of displaying, on the touch panel, an input character string display region in which a character string input by a user is displayed;
an instruction detection step of detecting a switching instruction for switching a screen of the touch panel, the switching instruction being issued by the user; and
a display control step of, when the switching instruction is detected in the instruction detection step, displaying a character input sheet having a software keyboard for inputting the character string, on the input character string display region in an overlapping manner on the touch panel, and making the character string displayed on the input character string display region visible.
